# EUROPÄISCHE PATENTSCHRIFT

(11) **EP 2 871 402 B1**
(45) Veröffentlichungstag und Bekanntmachung des Hinweises auf die Patenterteilung: **25.05.2016**
(21) Anmeldenummer: 13192042.3
(22) Anmeldetag: 08.11.2013
(51) Int. Cl.: F16P 3/08, F16P 3/14

(54) **Modularer Sicherheitsschalter**
Modular safety switch
Commutateur de sécurité modulaire

(43) Veröffentlichungstag der Anmeldung: 13.05.2015
(73) Patentinhaber: SICK AG, 79183 Waldkirch (DE)
(72) Erfinder: Schwarz, Adrian, 79183 Waldkirch (DE)
(74) Vertreter: Ludewigt, Christoph

(56) Entgegenhaltungen:
- EP-A1- 0 127 561
- DE-A1-102010 007 388
- DE-U1- 20 306 708
- US-A- 5 572 075

## Beschreibung

Die vorliegende Erfindung betrifft einen modularen Sicherheitsschalter zum Überwachen eines Schutzeinrichtungszustandes gemäß dem Oberbegriff des Anspruchs 1.

Herkömmliche bewegliche Schutzeinrichtungen, wie z. B. Türen, Klappen oder Hauben, die einen sicheren Zugang zu einer Anlage gewährleisten, müssen durch Sicherheitsschalter auf ihren Zustand, Offen oder Geschlossen, überwacht werden.

Eine solche Überwachung wird zum einen durch elektromechanische oder zum anderen durch berührungslose Sicherheitsschalter realisiert.

Aus der DE 10 2006 006 949 B4 ist ein Sicherheitssystem zum Überwachen des Zustandes einer Schutzeinrichtung bekannt, wobei das Sicherheitssystem aus einer Funktionseinheit als Grundmodul besteht, die ein Betätigermodul zum Verbinden z.B. einer Tür mit einem Türrahmen, ein Schlüsselmodul zum Aufschließen der Verbindung, und ein Schaltmodul zum Verschalten elektrischer Schaltkreise der Module des Sicherheitssystems aufweist.

Hierbei funktioniert eine Erweiterung des Sicherheitssystems anhand einer Übertragungswelle als Hauptachse rein mechanisch, so dass beim Anschluss eines weiteren Moduls an die Funktionseinheit die Übertragungswelle ein mechanisches Verriegeln des weiteren Moduls und ein elektrisches Verschalten auslöst.

Das Sicherheitssystem hat den Nachteil, dass es komplex und in seiner Variation beschränkt ist.

DE 203 06 708 U1 offenbart einen modularen Sicherheitsschalter gemäß dem Oberbegriff des Anspruchs 1, wobei der als Zuhaltung bezeichnete Sicherheitsschalter über eine Sensoreinheit mit einer Steuerung verbunden ist, so dass die Steuerung Sicherheitsfunktionen in Verbindung mit dem Sicherheitsschalter ausführt.

Es ist eine Aufgabe der vorliegenden Erfindung, einen modularen Sicherheitsschalter zum Überwachen eines Schutzeinrichtungszustandes derart zu verbessern, dass der Sicherheitsschalter in seiner Sicherheitsfunktionalität hoch flexibel und einfach erweiterbar ist.

Die Aufgabe wird erfindungsgemäß durch einen modularen Sicherheitsschalter zum Überwachen eines Schutzeinrichtungszustandes mit den Merkmalen des Anspruchs 1 gelöst.

Der Aufbau des Grundgehäuses des Sicherheitsschalters hat den Vorteil, dass die Teilkörper des Grundgehäuses völlig variabel an der Schutzeinrichtung anbringbar sind, so dass z. B. der Sicherheitsschalter nur von außerhalb oder innerhalb der Schutzeinrichtung zugänglich sein kann und dies insbesondere nur mit einem Befestigungselement unabhängig von der Montagesituation. Durch die formschlüssige Ausbildung der Teilkörper können sie gegenseitig als Anschläge sowohl bei Pendel- als auch bei Schiebetüren dienen, wobei die jeweils zueinander gerichteten Seiten der Teilkörper einen Neigungswinkel von ca. 45° aufweisen.

Gemäß einem bevorzugten Ausführungsbeispiel sind der Signalgeber und der Signalempfänger als Reed-Relais und/oder RFID-Transponder sowie in Technologien wie Hall oder GMR (*"giant magnetoresistance"*) ausgebildet.

Vorteilhafterweise weisen die Teilkörper magnetische oder mechanische Schließelemente auf, die die Schließkraft bewirken.

Gemäß einem weiteren Ausführungsbeispiel bilden die Erweiterungsmodule zumindest eine hermetische Abdeckung, eine Schließeinheit zum Aufbringen einer zusätzlichen Schließkraft, ein Nothalt-Taster zum sicheren Abschalten, eine oder mehrere kombinierte Zustandsanzeigen, ein Türgriff, eine Identifikationsleseeinheit zum Identifizieren einer Zugangsberechtigung oder eine kabelgebundene oder kabellose Kommunikationseinheit.

Bevorzugte Ausgestaltungen und Weiterbildungen sowie weitere Vorteile der Erfindung sind den Unteransprüchen, der nachfolgenden Beschreibung und den Zeichnungen zu entnehmen.

Im Folgenden wird die Erfindung anhand von Ausführungsbeispielen unter Bezugnahme auf die Zeichnungen im Einzelnen erläutert. In den Zeichnungen zeigen:
- Fig. 1: eine schematische Darstellung der Kernelemente eines erfindungsgemäßen Sicherheitsschalters;
- Fig. 1A: eine schematische Darstellung eines erfindungsgemäßen Ausführungsbeispiels;
- Fig. 2-2C: eine schematische Darstellung von erfindungsgemäßen Erweiterungsmodulen des Sicherheitsschalters.

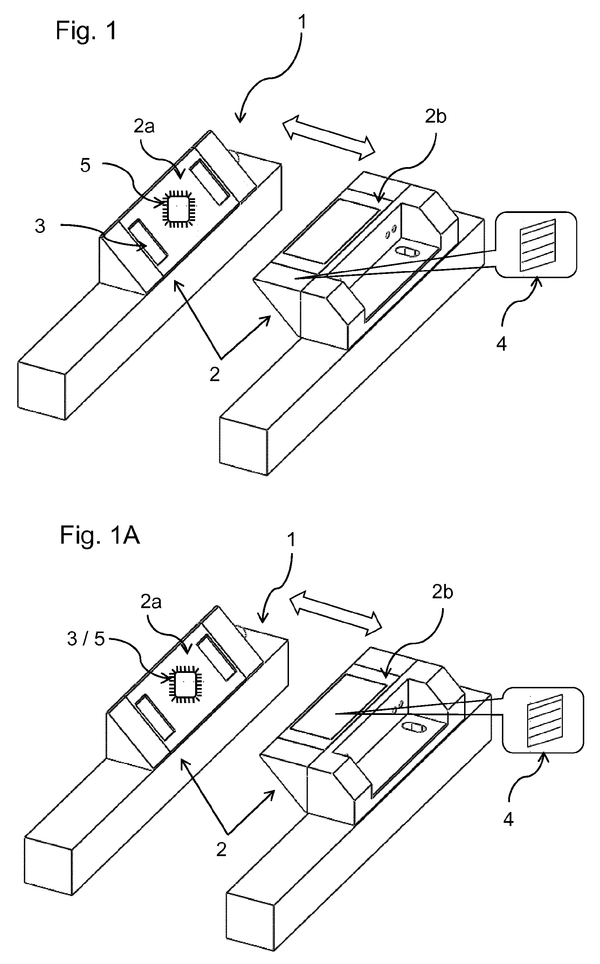

In der Figur 1 ist schematisch eine Schutzeinrichtung, wie z. B. eine Schiebetür, dargestellt, an der ein erfindungsgemäßer Sicherheitsschalter 1 vorgesehen ist.

Der Sicherheitsschalter 1 weist ein Grundgehäuse 2 auf, das in diesem Ausführungsbeispiel aus zwei Teilkörpern 2a, 2b besteht, die formschlüssig zueinander ausgebildet sind. Ein Teilkörper 2a ist am Rahmen der Schutzeinrichtung und der andere Teilkörper 2b am beweglichen Teil der Schutzeinrichtung befestigt. Im geschlossenen Zustand der Schutzeinrichtung dienen die Teilkörper 2a, 2b gegenseitig als Anschläge und bilden den Grundkörper 2 des Sicherheitsschalters 1.

Die Teilkörper 2a, 2b können variabel an der Schutzeinrichtung angebracht werden, so dass z. B. der Sicherheitsschalter 1 nur von außerhalb oder innerhalb der Schutzeinrichtung zugänglich ist. Dies ermöglicht unterschiedliche Montagesituationen des Sicherheitsschalters 1.

In einem Teilkörper 2a ist ein Signalempfänger 3 und in dem anderen Teilkörper 2b ist ein Signalgeber 4 vorgesehen, wobei auch eine umgekehrte Positionierung des Signalempfängers 3 und des Signalgebers 4 vorstellbar ist, so dass der Signalgeber 4 und der Signalempfänger 3 zusammen einen Zustand der Schutzeinrichtung ermitteln können. D. h. wenn der Signalgeber 4 und der Signalempfänger 3 direkt gegenüberliegend angeordnet sind, kann ein geschlossener Zustand der Schutzeinrichtung sicher erfasst und kommuniziert werden. Hierbei können der Signalgeber 4 und der Signalempfänger 3 derart ausgebildet sein, dass sie eine Rückhalte- bzw. Schließkraft generieren, wenn die Schutzeinrichtung sich im geschlossenen Zustand befindet. Die Schließkraft kann mittels magnetischer oder mechanischer Ausgestaltung im Teilkörper 2a und 2b erzeugt werden. Die Ausgestaltung kann sowohl in der Form als seperates Element im Teilkörper 2a und 2b sowie auch als integrierte Funktion im Signalgeber 4 und Signalempfängers 3 erzeugt werden.

Im gezeigten Ausführungsbeispiel sind der Signalgeber 4 und der Signalempfänger 3 als Reed-Relais und/oder RFID-Transponder sowie in Hall- und/oder GMRTechnologien ausgebildet, so dass eine sichere berührungslose Zustandsüberwachung der Schutzeinrichtung erfolgen kann.

Gemäß einem in der Figur 1A gezeigten, erfindungsgemäßen Ausführungsbeispiel kann der Signalempfänger 3 mit einer Auswerteeinheit 5 zusammen als ein Element ausgebildet sein, so dass es gleichzeitig das Vorhandensein des Signalgebers 4 detektiert, den Zustand des Sicherheitsschalters 1 auswertet und eine Rückhalte-bzw. Schließkraft bereitstellt. Bei dieser Ausgestaltung ist es vorteilhaft, dass das aus dem Signalempfänger 3 und der Auswerteeinheit 5 bestehende Element und der Signalgeber 4 mittig von den Teilkörpern 2a, 2b angeordnet sind. Hierbei können die Teilkörper 2a, 2b zusätzliche magnetische und/oder mechanische Schließelemente aufweisen, die die Rückhalte- bzw. Schließkraft erhöhen.

Erfindungsgemäß ist somit das Grundgehäuse 2 mit verschiedenartigen Sicherheitsfunktionen erweiterbar, die entsprechend einer Sicherheitsanforderung an die Schutzeinrichtung, wie z. B. sichere berührungslose Überwachung, sichere Rückhaltkraft, sichere Schließkraft und/oder dergleichen, unterschiedlich im und/oder am Grundgehäuse 2 anbringbar sind.

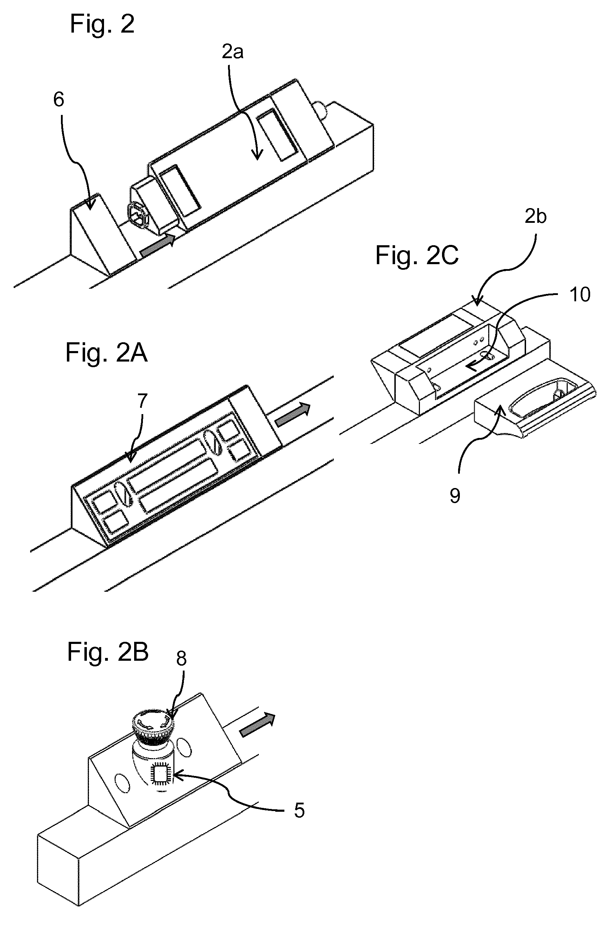

Um z. B. eine entsprechende Sicherheitsanforderung zu erfüllen, wie in der Figur 2 gezeigt, kann eine hermetisch dichte Abdeckung 6 ebenfalls am Grundgehäuse 2 angebracht werden, um eine hermetische Abdichtung des Sicherheitsschalters 1 zu erzielen.

Für eine sichere Rückhalte- bzw. Schließkraft ist, wie in der Figur 2A gezeigt, ein Schließelement 7 zum Aufbringen einer zusätzlichen Schließkraft am Grundgehäuse 2 anbringbar, der an einem der Teilkörper 2a einfach aufsteckbar ist.

Um eine weitere entsprechende Sicherheitsanforderung zu erfüllen, kann wie in Figur 2B gezeigt ein Nothalt-Schalter 8 zum sicheren Abschalten der Anlage als zusätzliches Modul auf einfachster Weise am Grundgehäuse 2 vorgesehen werden.

Bei Bedarf kann auch, wie in Figur 2C gezeigt, ein Türgriff 9 als Erweiterungsmodul an einem Befestigungselement 10 eines der Teilkörpers 2b angebracht werden, so dass eine Erweiterung des Funktionsumfanges des Sicherheitsschalters 1 einfach realisierbar ist.

Ferner kann die Auswerteeinheit 5 im Grundgehäuse 2 oder in einen der weiteren Erweiterungsmodule 8 vorgesehen sein, die den Typ des Signalgebers 3, des Signalempfängers 4 und der weiteren Module automatisch erkennt und auswertet. Die Auswerteeinheit 5 besteht aus einem auf einer Platine angebrachten Speicher, in dem vorteilhafterweise Daten der Erweiterungsmodule hinterlegt sind, so dass bei einem Anschluss eines Erweiterungsmoduls die Funktion des Erweiterungsmoduls automatisch erkannt und verarbeitet werden kann. Bei dieser Ausführung sind die Auswerteeinheit 5 und der Signalempfänger 3 als separate Elemente ausgebildet.

### Bezugszeichenliste

- 1: Sicherheitsschalter
- 2: Grundkörper
- 2a/2b: Teilkörper
- 3: Signalempfänger
- 4: Signalgeber
- 5: Auswerteeinheit
- 6: hermetische Abdeckung
- 7: Schließeinheit
- 8: Nothalt-Taster
- 9: Türgriff
- 10: Befestigungselement

## Patentansprüche

1. Modularer Sicherheitsschalter (1) zum Überwachen eines Schutzeinrichtungszustandes mit einem Grundgehäuse (2), das aus zumindest zwei Teilkörpern besteht, die formschlüssig zueinander ausgebildet sind, wobei ein Signalempfänger (3) in einem Teilkörper (2a) und ein Signalgeber (4) in dem anderen Teilkörper (2b) vorgesehen sind, so dass ein sicherer Zustand der Schutzeinrichtung erfassbar ist, und die Teilkörper (2a, 2b) derart ausgebildet sind, dass eine Rückhalte- bzw. Schließkraft ausgebildet ist, so dass die Teilkörper (2a, 2b) zusammen gehalten sind, wenn die Teilkörper (2a, 2b) sich gegenüberliegend angeordnet sind, **dadurch gekennzeichnet, dass** der modulare Sicherheitsschalter (1) an dem Grundgehäuse (2) anzubringende Erweiterungsmodule (6, 7, 8, 9) umfasst, und dass das Grundgehäuse (2) und/oder die Erweiterungsmodule mit verschiedenartigen Sicherheitsfunktionen erweiterbar sind, wobei die Sicherheitsfunktionen entsprechend einer Sicherheitsanforderung an die Schutzeinrichtung unterschiedlich im Grundgehäuse (2) und/oder in den Erweiterungsmodulen (6, 7, 8, 9) vorgesehen sind, wobei eine Auswerteeinheit (5) im Grundgehäuse (2) oder in einem der weiteren Erweiterungsmodule (8) vorgesehen ist, die den Typ des Signalgebers (4), des Signalempfängers (3) und der weiteren Erweiterungsmodule (6, 7, 8, 9) automatisch erkennt und verarbeitet.

2. Modularer Sicherheitsschalter (1) nach Anspruch 1, **dadurch gekennzeichnet, dass** der Signalgeber (4) und der Signalempfänger (3) als Reed-Relais und/oder RFID-Transponder sowie in Hall- und/ oder GMR-Technologien ausgebildet sind.

3. Modularer Sicherheitsschalter (1) nach Anspruch 1 oder 2, **dadurch gekennzeichnet, dass** die Teilkörper (2a, 2b) magnetische und/oder mechanische Schließelemente aufweisen, die die Rückhalte- bzw. Schließkraft bewirken.

4. Modularer Sicherheitsschalter (1) nach zumindest einem der vorhergehenden Ansprüche, **dadurch gekennzeichnet, dass** die Erweiterungsmodule (6, 7, 8, 9) zumindest eine hermetische Abdeckung (6), eine Schließeinheit (7) zum Aufbringen einer zusätzlichen Rückhalte- bzw. Schließkraft, ein Nothalt-Taster (8) zum sicheren Abschalten, eine oder mehrere Zustandsanzeigen, ein Türgriff (9), eine Identifikationsleseeinheit zum Identifizieren einer Zugangsberechtigung oder eine kabelgebundene oder kabellose Kommunikationseinheit bilden.

5. Modularer Sicherheitsschalter (1) nach Anspruch 1, **dadurch gekennzeichnet, dass** die Auswerteeinheit 5 und der Signalempfänger 3 als ein integrales Element ausgebildet sind.

## Claims

1. A modular safety switch (1) for monitoring a state of a protective device having a base housing (2) which comprises at least two part bodies which are formed in a shape-matched manner with respect to one another, wherein a signal receiver (3) is provided in one part body (2a) and a signal generator (4) is provided in the other part body (2b) such that a safe state of the protective device can be detected, and wherein the part bodies (2a, 2b) are configured such that a retention and closing force is formed such that the part bodies (2a, 2b) are held together when the part bodies (2a, 2b) are arranged disposed opposite one another, **characterised in that** the modular safety switch (1) comprises expansion modules (6, 7, 8, 9) to be attached to the base housing (2); and **in that** the base housing (2) and/or the expansion modules can be expanded by different types of safety functions, with the safety function being differently provided in accordance with a safety demand on the protective device in the base housing (2) and/or in the expansion modules (6, 7, 8, 9), with an evaluation unit (5) being provided in the base housing (2) or in one of the further expansion modules (8) which automatically recognises and processes the type of the signal generator (4), of the signal receiver (3) and of the further expansion modules (6, 7,8, 9).

2. A modular safety switch (1) in accordance with claim 1, **characterized in that** the signal generator (4) and the signal receiver (3) are configured as reed relays and/or as RFID transponders as well as in Hall technologies or in GMR technologies.

3. A modular safety switch (1) in accordance with claim 1 or claim 2, **characterized in that** the part bodies (2a, 2b) have magnetic and/or mechanical closing elements which effect the retention and/or closing force.

4. A modular safety switch (1) in accordance with at least one of the preceding claims, **characterized in that** the expansion modules (6, 7, 8, 9) form at least one hermetic cover (6), a closing unit (7) for applying an additional retention and/or closing force, an emergency stop button (8) for a safe switching off, one or more state displays, a door handle (9), an identification unit for identifying an access authorisation or a cabled or cableless communication unit.

5. A modular safety switch (1) in accordance with claim 1, **characterized in that** the evaluation unit (5) and the signal receiver (3) are formed as integral elements.

## Revendications

1. Commutateur de sécurité modulaire (1) pour la surveillance d'un état d'un système protecteur, comprenant un boîtier de base (2), composé d'au moins deux corps partiels qui sont réalisés l'un par rapport à l'autre en coopération de formes, dans lequel un récepteur de signaux (3) est prévu dans un corps partiel (2a) et un émetteur de signaux (4) est prévu dans l'autre corps partiel (2b), de telle sorte qu'il est possible de détecter un état de sécurité du système protecteur, et les corps partiels (2a, 2b) sont réalisés de telle façon qu'il apparaît une force de retenue ou une force de fermeture, de sorte que les corps partiels (2a, 2b) sont maintenus ensemble quand les corps partiels (2a, 2b) sont agencés à l'opposé l'un de l'autre, **caractérisé en ce que** le commutateur de sécurité modulaire (1) inclut des modules d'agrandissement (6, 7, 8, 9) à rapporter sur le boîtier de base (2), et **en ce que** le boîtier de base (2) et/ou les modules d'agrandissement sont susceptibles d'être agrandis avec des fonctions de sécurité les plus différentes, dans lequel les fonctions de sécurité sont prévues en correspondance d'une exigence de sécurité posée au système de sécurité, de manière différente dans le boîtier de base (2) et/ou dans les modules d'agrandissement (6, 7, 8, 9), dans lequel il est prévu une unité d'évaluation (5) dans le boîtier de base (2) ou dans l'un des autres modules d'agrandissement (8), qui reconnaît et qui traite automatiquement le type de l'émetteur de signaux (4), du récepteur de signaux (3), et des autres modules d'agrandissement (6, 7, 8, 9).

2. Commutateur de sécurité modulaire (1) selon la revendication 1, **caractérisé en ce que** l'émetteur de signaux (4) et le récepteur de signaux (3) sont réalisés comme des relais de type Reed et/ou des transpondeurs RFID, et suivant les technologies de Hall et/ou GMR.

3. Commutateur de sécurité modulaire (1) selon la revendication 1 ou 2, **caractérisé en ce que** les corps partiels (2a, 2b) comprennent des éléments de fermeture magnétiques et/ou mécaniques, qui produisent la force de retenue ou la force de fermeture.

4. Commutateur de sécurité modulaire (à) selon l'une au moins des revendications précédentes, **caractérisé en ce que** les modules l'agrandissement (6, 9, 8, 9) forment au moins une fermeture hermétique, une unité de fermeture (7) pour appliquer une force de retenue ou de fermeture additionnelle, un bouton de secours (8) pour une coupure de sécurité, un ou plusieurs indicateurs d'état, une poignée de porte (9), une unité d'identification pour identifier une autorisation d'accès, au une unité de communication filaire ou sans fil.

5. Commutateur de sécurité modulaire (1) selon la revendication 1, **caractérisé en ce que** l'unité d'évaluation (5) et le récepteur de signaux (3) sont réalisés comme un élément intégral.
